# EUROPEAN PATENT APPLICATION

(11) **EP 2 626 337 A2**
(43) Date of publication of application: **14.08.2013**
(21) Application number: 11830929.3
(22) Date of filing: 06.10.2011
(51) Int. Cl.: C03C 27/06, C03C 17/00, E06B 3/663, B32B 17/00

(54) **VACUUM GLASS PANEL AND METHOD FOR MANUFACTURING SAME**

(30) Priority: 07.10.2010 KR 20100097975
(71) Applicant: LG Hausys, Ltd., Seoul 150-721 (KR)
(72) Inventor: SON, Beom-Goo, Hwaseong-si Gyeonggi-do 445-773 (KR); SONG, Su-Bin, Uiwang-si Gyeonggi-do 437-080 (KR)
(74) Representative: Algemeen Octrooi- en Merkenbureau
(86) International application number: PCT/KR2011/007415
(87) International publication number: WO 2012/047044

(57) **Abstract**

Disclosed is a vacuum glass panel in which patterned spacers are formed by a print system using ceramic ink so as to enable the shapes of the patterned spacers and spacing between the patterned spacers to be uniformly controlled and so as to improve the speed of forming patterned spacers. The vacuum glass panel according to the present invention comprises: an upper glass sheet; a lower glass sheet facing the upper glass sheet; a sealing material arranged along the edges of the upper glass sheet and lower glass sheet to seal the upper glass sheet and the lower glass sheet such that a vacuum layer is formed in the space between the upper glass sheet and the lower glass sheet; and one or more patterned spacers inserted into the vacuum layer between the upper glass sheet and the lower glass sheet so as to maintain a gap having a predetermined thickness between the upper glass sheet and the lower glass sheet. The patterned spacers are made of ceramic ink.

## Description

### Technical Field

The present invention relates to a vacuum glass panel and a method for manufacturing the same, and more particularly, to a vacuum glass panel and a method for manufacturing the same, which can precisely control intervals and shapes of vacuum layers by applying a printing method using ceramic ink in a method of forming a vacuum layer maintaining spacer.

### Background Art

About 25% of the energy generated in Korea is consumed by buildings and energy loss incurred through windows takes up nearly 35% of energy consumed by buildings.

This is caused by a fact that the window has about two to five times as high a rate of heat transmission as a wall or a ceiling. This window is the poorest building material used in buildings in terms of thermal insulation.

Recently, research and development of a highly thermally insulating window having thermal conductivity similar to that of a wall has been underway, with the intent of energy conservation at the national level and for building operators.

In general, a window is made up of a frame and glass. The majority of thermal conduction occurs through the glass, occupying the majority of the surface area of windows. Above all, remarkable reduction in heat loss through the window is an urgent matter.

### [Disclosure]

### [Technical Problem]

An aspect of the present invention is to provide a vacuum glass panel capable of selectively controlling shapes of spacers interposed between upper and lower glass sheets and intervals between the spacers.

Another aspect of the present invention is to provide a vacuum glass panel in which patterned spacers are formed using ceramic ink, thereby making it possible to prevent separation of the spacers and to form the spacers in various shapes.

### Technical Solution

In accordance with one aspect of the present invention, a vacuum glass panel includes: an upper glass sheet; a lower glass sheet facing the upper glass sheet; a sealing material arranged along edges of the upper and lower glass sheets to seal a space between the upper and lower glass sheets such that a vacuum layer is formed in the space between the upper and lower glass sheets; and one or more patterned spacers interposed in the vacuum layer between the upper and lower glass sheets to maintain a gap having a predetermined thickness between the upper and lower glass sheets, wherein the patterned spacers are formed of ceramic ink.

Here, the gap between the upper and lower glass sheets may range from 0.1 mm to 0.5 mm.

The patterned spacers may be disposed in a matrix array.

The patterned spacers may be formed in a hexahedral or cylindrical shape.

The patterned spacers may have a length of 0.2 mm to 1 mm and a height of 0.1 mm to 0.5 mm.

In accordance with another aspect of the present invention, a method of manufacturing a vacuum glass panel includes: forming patterned spacers on a lower glass sheet; applying a sealant along edges of the upper and lower glass sheets to form a sealing material; placing an upper glass sheet on top of the lower glass sheet to bond the upper and lower glass sheets to each other while facing each other; and evacuating air from a space between the upper and lower glass sheets to form a vacuum layer therebetween.

The forming patterned spacers may include: applying ceramic ink to a patterned spacer forming region of the lower glass sheet to form one or more ceramic ink layers; drying the ceramic ink layers formed on the lower glass sheet; and sintering the dried ceramic ink layers.

The drying and the sintering may be performed at a temperature of 200°C to 400°C.

The patterned spacers may have a length of 0.2 mm to 1 mm and a height of 0.1 mm to 0.5 mm.

### Advantageous Effects

In the vacuum glass panel and the method of manufacturing the same according to the present invention, the patterned spacers are formed by printing ceramic ink, the shape of which is not changed, followed by drying and sintering at 200°C to 400°C. As a result, it is easy to control the shapes of the patterned spacers and the intervals between the patterned spacers, and it is possible to prevent the patterned spacers from being separated from each other.

In addition, the vacuum glass panel and the method of manufacturing the same according to the present invention allow reduction in process time required to form the patterned spacers.

### Description of Drawings

Fig. 1 is a schematic plan view of a vacuum glass panel according to one embodiment of the present invention.
Fig. 2 is a cross-sectional view taken along line II-II of Fig. 1.
Figs. 3 and 4 are enlarged perspective views of a patterned spacer according to one embodiment of the present invention.
Figs. 5 to 9 are process sectional views of a method of manufacturing a vacuum glass panel according to one embodiment of the present invention.
Fig. 10 is a process sectional view showing a method of manufacturing a vacuum glass panel according to a comparative example.

### Best Mode

The above and other aspects, features, and advantages of the present invention will become apparent from the detailed description of the following embodiments in conjunction with the accompanying drawings. It should be understood that the present invention is not limited to the following embodiments and may be embodied in different ways, and that the embodiments are provided for complete disclosure and thorough understanding of the invention by those skilled in the art. The scope of the present invention is defined only by the claims. Like components will be denoted by like reference numerals throughout the specification.

Now, a vacuum glass panel and a method of manufacturing the same according to the present invention will be described in detail with reference to the accompanying drawings.

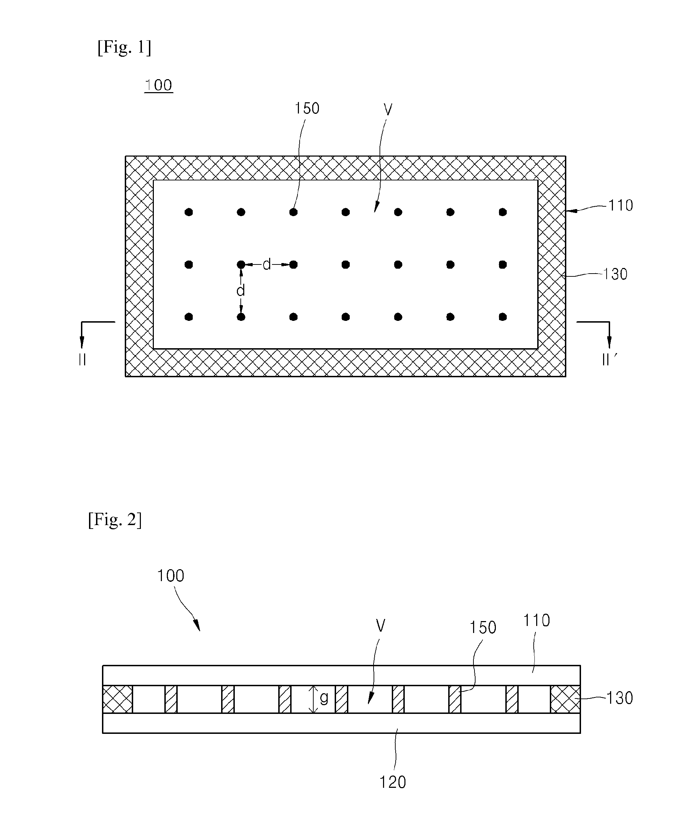

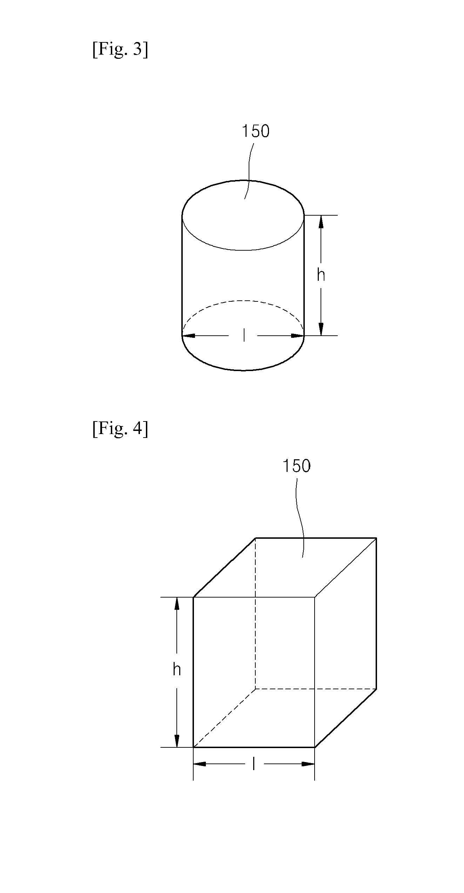

Fig. 1 is a schematic plan view of a vacuum glass panel according to one embodiment of the present invention. Fig. 2 is a cross-sectional view taken along line II-II of Fig. 1. Figs. 3 and 4 are enlarged perspective views of a patterned spacer according to one embodiment of the present invention.

Referring to Figs. 1 and 2, a vacuum glass panel 100 according to one embodiment of the present invention includes an upper glass sheet 110, a lower glass sheet 120, a sealing material 130, and at least one patterned spacer 150.

The upper glass sheet 110 and the lower glass sheet 120 are disposed apart from and in parallel to each other so as to face each other. Preferably, the upper glass sheet 110 and the lower glass sheet 120 are designed to have a plate shape and the same area. Alternatively, the lower glass sheet 120 may be designed to have a greater area than the upper glass sheet 110.

The sealing material 130 is arranged along edges of the upper and lower glass sheets 110 and 120, and seals the upper and lower glass sheets 110 and 120 such that a vacuum layer V is formed in a space between the upper and lower glass sheets 110 and 120. Thus, the upper and lower glass sheets 110 and 120 are bonded to each other by the sealing material 130 so as to face each other.

The patterned spacer 150 is disposed in the vacuum layer V between the upper glass sheet 110 and the lower glass sheet 120 to maintain a gap g having a predetermined thickness between the upper and lower glass sheets 110 and 120. Here, the gap g between the upper and lower glass sheets 110 and 120 preferably ranges from 0.1 mm to 0.5 mm.

The number of patterned spacers 150 disposed in the vacuum layer V may be one or more. Here, the patterned spacers 150 may be arranged in a matrix array when viewed from the top. This minimizes thickness deviation between the edge and the center of the vacuum glass panel 100, whereby the gap g can be secured at a constant thickness throughout the vacuum glass panel 100.

Particularly, the patterned spacers 150 according to the present embodiment may be formed by drying and sintering ceramic ink at a high temperature of about 200°C to 400°C such that the shape of the ceramic ink is not deformed.

In the present invention, as a component of the ceramic ink, glass powder may be used. The glass powder may be an inorganic component (inorganic binder), which assists in stable fixation of the ceramic ink component (improved bonding strength). Especially, oxide glass powder is preferable. Such glass powder may include lead-based glass powder, zinc-based glass powder, and borosilicate-based glass powder, and typically uses one or two selected from the group consisting of oxide glass powders consisting essentially of oxides specified below, i.e. PbO-SiO₂-B₂O₃-based glass powder, PbO-SiO₂-B_{2O3}-Al₂O₃-based glass powder, ZnO-SiO₂-based glass powder, ZnO-B₂O₃-SiO₂-based glass powder, Bi₂O₃-SiO₂-based glass powder, and Bi₂O₃-B₂O₃-SiO₂-based glass powder.

The PbO-SiO₂-B₂O₃-based glass powder is composed of 70 wt% to 90 wt% of lead oxide (PbO), 1 wt% to 5 wt% of silicon dioxide (SiO₂), and 5 wt% to 15 wt% of boron oxide (B₂O₃).

In the case of the lead oxide (PbO), which is present in an amount of 70 wt% to 90 wt% in the PbO-SiO₂-B₂O₃-based glass powder, if the amount of the added lead oxide (PbO) is less than 70 wt%, glass transition temperature and glass bonding temperature are increased, and if the amount of the lead oxide (PbO) exceeds 90 wt%, the glass powder is likely to lose transparency during melting. In the case of the silicon dioxide (SiO₂), which is present in an amount of 1 wt% to 5 wt% in the glass powder, if the amount of the silicon dioxide (SiO₂) is less than 1 wt%, the glass powder has low mechanical strength, and if the amount of the silicon dioxide (SiO₂) exceeds 5 wt%, the melting point of the glass powder is increased. In the case of the boron oxide (B₂O₃), which is present in an amount of 5 wt% to 15 wt% in the glass powder, if the amount of the boron oxide (B₂O₃) is less than 5 wt%, there is a risk of devitrification during melting, and if the amount of the boron oxide (B₂O₃) exceeds 15 wt%, the glass powder increases in glass transition temperature.
Further, when the components of the glass powder composing the ceramic ink are outside these ranges as described above, the ceramic ink can be deformed at a high temperature of 200°C to 400°C and has a difficulty in maintaining shape during drying and sintering.

Also, as long as the feature that the shape of the ceramic ink is not changed at a high temperature of 200°C to 400°C during drying and sintering is not deteriorated, a variety of organic additives may be included in the ceramic ink. For example, the organic additives may include an organic binder. More particularly, the organic binder may be present in an amount of 0 to 10 wt%. If the amount of the organic binder is outside this range, unstable sintering can occur at high temperature.
The patterned spacers 150 formed of the ceramic ink may be formed by a printing method, for instance, ink-jet printing. In this way, when the patterned spacers 150 are formed by the printing method, it is easy to control a shape of each patterned spacer 150 and an interval between the patterned spacers 150, and it is possible to prevent the patterned spacers 150 from being separated from each other. Furthermore, it is possible to reduce a process time required to form the patterned spacers 150.

Meanwhile, referring to Fig. 3, the patterned spacer 150 may be formed in a cylindrical shape. Alternatively, referring to Fig. 4, the patterned spacer 150 may be formed in a hexahedral shape.

Although not shown in detail in the drawings, the patterned spacers 150 are not limited to the cylindrical and hexahedral shapes. Thus, it is apparent that the patterned spacer 150 may have various shapes such as an octahedron, a dodecahedron, and the like.

In this way, the patterned spacer 150 having a cylindrical or hexahedral shape is preferably formed so as to have a length lof 0.2 mm to 1 mm and a height h of 0.1 mm to 0.5 mm. If the length l of the patterned spacer 150 is less than 0.2 mm, the patterned spacer 150 can be damaged by a load of the upper or lower glass sheet 110 or 120. If the length l of the patterned spacer 150 exceeds 1 mm, this can deteriorate the appearance of the finished window.
Further, if the height h of the patterned spacer 150 is less than 0.1 mm, it is difficult to provide the vacuum layer V and interference can occur between the upper and lower glass sheets 110 and 120. If the height h of the patterned spacer 150 exceeds 0.5 mm, the gap g between the upper and lower glass sheets 110 and 120 is excessively increased, so that the vacuum glass panel can be vulnerable to external impact or vibration.

Here, the gap g between the upper and lower glass sheets 110 and 120 may be controlled by the height h of the patterned spacer 150.

A separation distance d between the patterned spacers 150 may be dependent on areas of the upper and lower glass sheets 110 and 120, and is preferably about 5 to 30 mm.

In the aforementioned vacuum glass panel according to the present invention, the patterned spacers are formed by the printing method using the ceramic ink, the shape of which is not changed at temperatures from 200°C to 400°C, whereby it is easy to control the shapes of the patterned spacers and the intervals between the patterned spacers, and it is possible to prevent the patterned spacers from being separated from each other.

Further, the vacuum glass panel according to the present invention can shorten the process time required to form the patterned spacers.

Hereinafter, a method of manufacturing a vacuum glass panel according to one embodiment of the present invention will be described in detail with reference to the accompanying drawings.

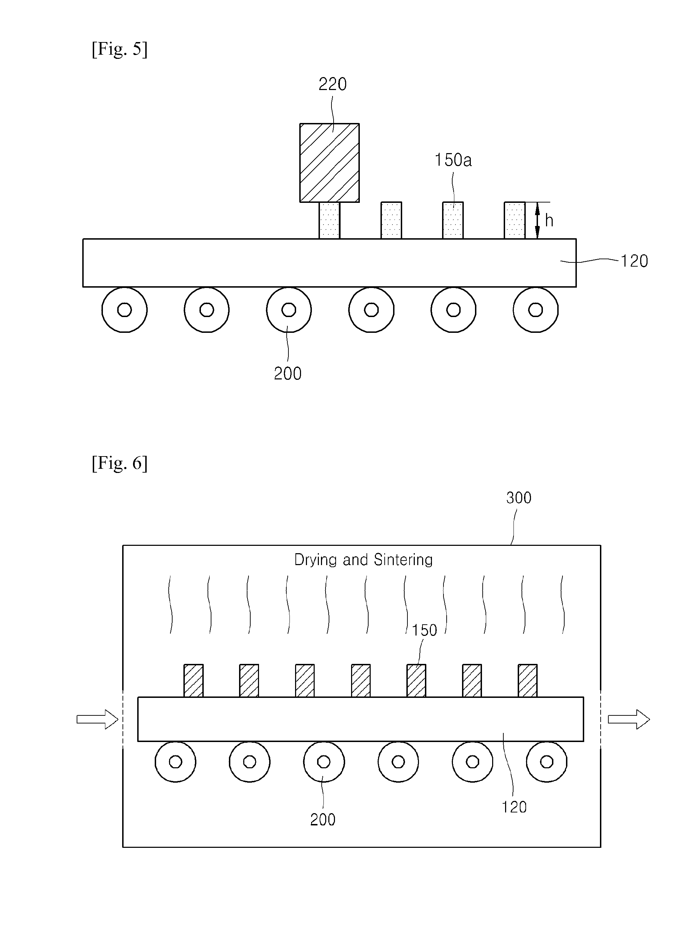

Figs. 5 to 7 are process sectional views of a method of manufacturing a vacuum glass panel according to one embodiment of the present invention.

Referring to Fig. 5, a lower glass sheet 120, which has been subjected to a cleaning process, is transferred from a cleaning chamber (not shown) by a transfer rail 200. Then, ceramic ink is applied to a patterned spacer forming region (not shown) of the lower glass sheet 120, thereby forming at least one ceramic ink layer 150a. Here, the ceramic ink layer 150a may have a length l of 0.2 mm to 1 mm and a height h of 0.1 mm to 0.5 mm.

In the process of forming the ceramic ink layer 150a, the transfer rail 200 may be configured to stop driving or to be driven slowly.

This ceramic ink layer 150a may be formed by applying the ceramic ink to the patterned spacer forming region using a printing device 220 which stores the ceramic ink. Here, Fig. 5 shows the process of sequentially forming the ceramic ink layers 150a using a single printing device 220. Alternatively, the ceramic ink layers 150a may be formed throughout the patterned spacer forming region at once using one or more printing devices (not shown).

Referring to Fig. 6, after all of the ceramic ink layers 150a (Fig. 5) are formed on the patterned spacer forming region of the lower glass sheet 120, the transfer rail 200 is again driven to input the lower glass sheet 120, on which the ceramic ink layers are formed, into a furnace 300.

Then, the ceramic ink layers on the lower glass sheet 120 are dried and sintered in the furnace 300 for a predetermined time, and thus converted into patterned spacers 150. Here, drying and sintering may be performed at 200°C to 400°C. As a result, the patterned spacers 150 are formed on the lower glass sheet 120.

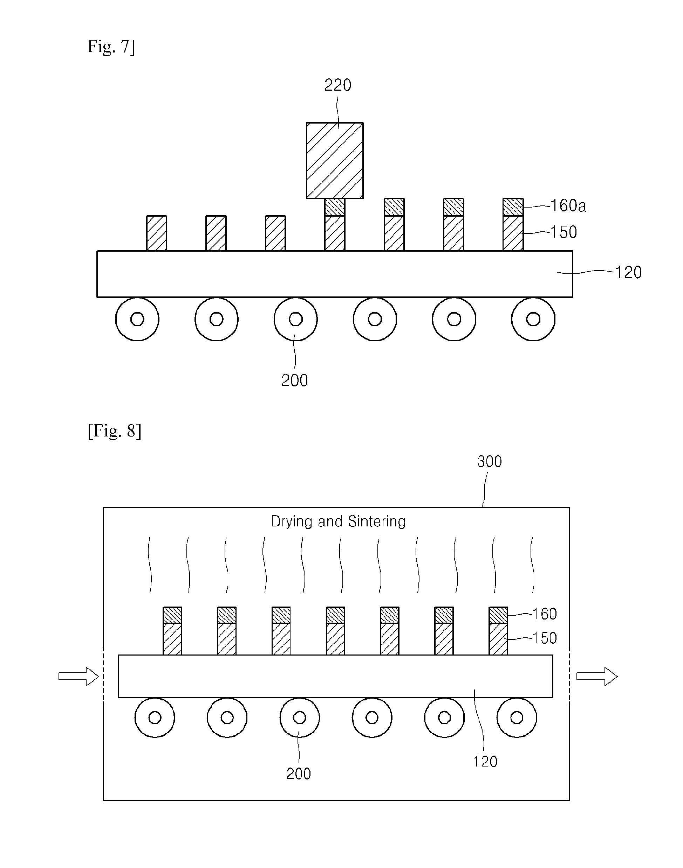

Referring Figs. 7 and 8, after drying is performed, the process of forming the patterned spacers is additionally included. After all of the ceramic ink layers 160a (Fig. 7) are formed on the region of the lower glass sheet 120 having the patterned spacers 150, the transfer rail 200 is again driven to input the lower glass sheet 120, on which the patterned spacers 150 are formed, into the furnace 300.

Then, the ceramic ink layers on the patterned spacers 150 are dried and sintered in the furnace 300 for a predetermined time, and thus are converted into the patterned spacers 160. Here, drying and sintering may be performed at 200°C to 400°C. As a result, the patterned spacers 160 are additionally formed on the patterned spacers 150.

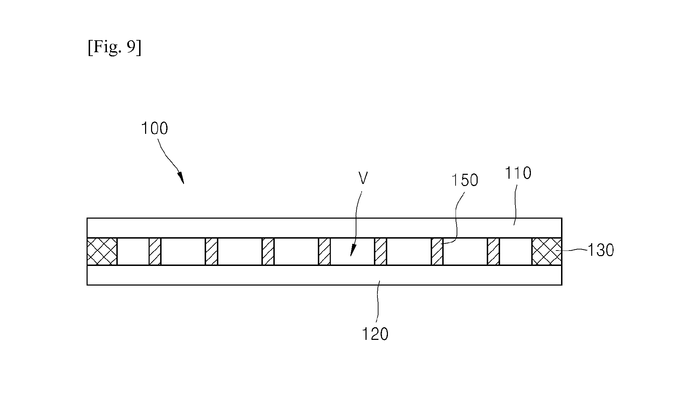

Next, referring to Fig. 9, a sealant is applied along an edge of the lower glass sheet 120 on which the patterned spacers 150 are formed, thereby forming a sealing material 130. Then, the upper glass sheet 110 is disposed on the lower glass sheet 120 to bond the upper and lower glass sheets 110 and 120 to each other while facing each other.

Next, a vacuum layer V is formed by evacuating air from a space between the upper and lower glass sheets 110 and 120. Here, although not specifically shown in the drawings, the upper glass sheet 110 may be formed with an exhaust hole (not shown) passing through one corner thereof. Air between the upper and lower glass sheets 110 and 120 is exhausted through the exhaust hole by a vacuum pump (not shown), whereby the vacuum layer V can be formed. In this way, after the vacuum layer V is formed, the exhaust hole is blocked by an additional sealing material (not shown).

The vacuum glass panel 100 according to the present embodiment can be manufactured by the aforementioned processes.

Specifically, the method of manufacturing the vacuum glass panel of the present invention forms the patterned spacers to improve production speed, unlike conventional methods that require a positioner and a spacer arrangement plate for individually positioning the spacers, and employs ceramic ink to advantageously control the shapes of the patterned spacers since the shape of the ceramic ink is not changed at high temperature, as compared with using shaping bodies formed of a metal or ceramic material. Further, silk screen printing is used, whereby a degree of freedom of the shapes of the patterned spacers is increased, thereby allowing the patterned spacers to be printed in various shapes without changing the overall configuration of facilities.

Hereinafter, the present invention will be described in more detail with reference to examples, but it should be understood that the scope of the present invention is not limited to the following examples.

### <Example and Comparative Example>

### Example

Ceramic ink layers, each including a glass powder comprising 80 wt% of PbO, 10 wt% of B₂O₃, 4 wt% of SiO₂, and 6 wt% of an organic binder (BCA+NC), and having a length of 1 mm and a height of 0.5 mm, were formed on a lower glass sheet. After all of the ceramic ink layers were formed on a patterned spacer forming region of the lower glass sheet, a transfer rail was again driven to input the lower glass sheet, on which the ceramic ink layers were formed, into a furnace. The ceramic ink layers formed on the lower glass sheet were dried at 200°C for 3 minutes, baked at 400°C, and were changed into patterned spacers.

### Comparative Example

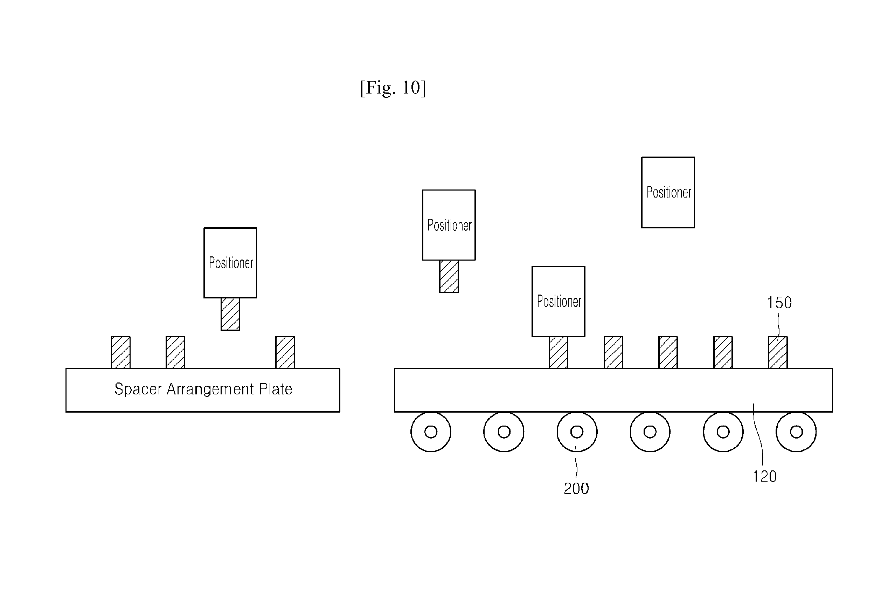

Patterned spacers, each of which had a diameter of 0.5 mm and a height of 0.25 mm and was formed of a metallic material (stainless steel, SUS304), were formed at intervals of 20 mm on a spacer arrangement plate. Each of the patterned spacers formed on the spacer arrangement plate was positioned on a positioner, and was transferred. Then, each patterned spacer was placed on the lower glass sheet. Thereby, the patterned spacers can be manufactured (Fig. 10).
(1) The number of incorrectly positioned spacers refers to the number of spacers per unit area which were not correctly positioned.
(2) A positioning cycle time refers to a period of time to place the spacers per unit area in position.
(3) A degree of freedom for spacer arrangement refers to a degree of freedom for arrangement of the spacers in a quadrangle, a circle, and the like, and for change in interval between the spacers.
(4) A degree of freedom for spacer shapes refers to a degree of freedom for spacer shapes of a cylinder, a hexahedron, and the like.

**Table 1**

| Results of Evaluation | Example | Comparative Example |
|---|---|---|
| Number of incorrectly positioned spacers | average 0 EA/m² | average 3 EA/m² |
| Positioning cycle time | Average 5 min/m² | Average 15 min/m2 |
| Degree of for Freedomspacer arrangement | High | Low |
| Degree of for Freedom forspacer shapes | High | Low |

Referring to results shown in Table 1, the patterned spacers (Example) formed by drying the ceramic ink are characterized in that there are no incorrectly positioned spacers, productivity is high due to a short cycle time as compared with that of Comparative Example, and the spacers can have various shapes and arrangements due to high degrees of freedom for spacer shapes and arrangement. In contrast, in the case of the spacers using the positioners (Comparative Example), a separate repairing function is required because the spacers cannot be correctly positioned, and productivity is low due to a long cycle time as compared with that of Example. Further, when changing the spacer shape or arrangement, it is necessary to manufacture separate spacers, and thus positioning facilities fitted to the spacers must be changed. Thus, it can be seen that the inventive example has advantages in that productivity is high and that the spacers can be freely changed.

Although some embodiments have been described herein, it will be understood by those skilled in the art that these embodiments are provided for illustration only, and various modifications, changes, alterations and equivalent embodiments can be made without departing from the scope of the present invention. Therefore, the scope and sprit of the present invention should be defined only by the accompanying claims and equivalents thereof.

## Claims

1. A vacuum glass panel comprising:
an upper glass sheet;
a lower glass sheet facing the upper glass sheet;
a sealing material arranged along edges of the upper and lower glass sheets to seal a space between the upper and lower glass sheets such that a vacuum layer is formed in the space between the upper and lower glass sheets; and
one or more patterned spacers interposed in the vacuum layer between the upper and lower glass sheets to maintain a gap having a predetermined thickness between the upper and lower glass sheets, the patterned spacers being formed of ceramic ink.

2. The vacuum glass panel according to claim 1, wherein the gap between the upper and lower glass sheets ranges from 0.1 mm to 0.5 mm.

3. The vacuum glass panel according to claim 1, wherein the patterned spacers are disposed in a matrix array.

4. The vacuum glass panel according to claim 1, wherein the patterned spacers are formed in a hexahedral or cylindrical shape.

5. The vacuum glass panel according to claim 4, wherein the patterned spacers have a length of 0.2 mm to 1 mm and a height of 0.1 mm to 0.5 mm.

6. The vacuum glass panel according to claim 1, wherein the ceramic ink is not changed in shape upon drying and sintering at a temperature of 200°C to 400°C.

7. The vacuum glass panel according to claim 1, wherein the ceramic ink comprises at least one glass powder selected from the group consisting of PbO-SiO₂-B₂O₃-based glass powder, PbO-SiO₂-B₂O₃-Al₂O₃-based glass powder, ZnO-SiO₂-based glass powder, ZnO-B₂O₃-SiO₂-based glass powder, Bi₂O₃-SiO₂-based glass powder, and Bi₂O₃-B₂O₃-SiO₂-based glass powder.

8. The vacuum glass panel according to claim 7, wherein the PbO-SiO₂-B₂O₃-based glass powder comprises 70 wt% to 90 wt% of lead oxide (PbO), 1 wt% to 5 wt% of silicon dioxide (SiO₂), and 5 wt% to 15 wt% of boron oxide (B₂O₃).

9. A method of manufacturing a vacuum glass panel, comprising:
forming patterned spacers on a lower glass sheet;
applying a sealant along edges of the upper and lower glass sheets to form a sealing material;
placing an upper glass sheet on top of the lower glass sheet to bond the upper and lower glass sheets to each other while facing each other; and
evacuating air from a space between the upper and lower glass sheets to form a vacuum layer therebetween.

10. The method according to claim 9, wherein the forming patterned spacers comprises: applying ceramic ink to a patterned spacer forming region of the lower glass sheet to form one or more ceramic ink layers; drying the ceramic ink layers formed on the lower glass sheet; and sintering the dried ceramic ink layers.

11. The method according to claim 10, further comprising: forming the patterned spacers after drying.

12. The method according to claim 10, wherein the drying and the sintering are performed at a temperature of 200°C to 400°C.
